# FASCICULE DE BREVET EUROPEEN

(11) **EP 0 514 295 B1**
(45) Date de publication et mention de la délivrance du brevet: **12.04.1995**
(21) Numéro de dépôt: 92420152.8
(22) Date de dépôt: 12.05.1992
(51) Int. Cl.: H01H 1/58, H01R 13/514

(54) **Dispositif d'assemblage mécanique et électrique de boîtiers moulés miniatures**
Mechanische und elektrische Zusammenfassungsvorrichtung für umspritzte Miniaturgehäuse
Mechanical and electric assembly device for miniature moulded cases

(30) Priorité: 16.05.1991 FR 9105995
(43) Date de publication de la demande: 19.11.1992
(73) Titulaire: SCHNEIDER ELECTRIC SA, 92100 Boulogne Billancourt (FR)
(72) Inventeur: Vasseur, André, Merlin Gerin, F-38050 Grenoble Cédex 9 (FR); Maton Claude J., Merlin Gerin, F-38050 Grenoble Cédex 9 (FR); De Myttenaere, Alain, Merlin Gerin, F-38050 Grenoble Cédex 9 (FR)
(74) Mandataire: Ritzenthaler, Jacques

(56) Documents cités:
- DE-A- 1 948 971
- DE-A- 2 135 728
- FR-A- 2 550 907
- GB-A- 2 029 109
- GB-A- 2 191 041

## Description

L'invention est relative à un dispositif d'assemblage de deux boîtiers moulés accolés de logement d'un appareillage électrique miniature ayant un circuit, notamment de commande, relié à deux bornes de connexion externe, comprenant un cavalier de liaison à fixation rapide qui chevauche en position active l'interface des deux boîtiers, et dont les parties en saillie de part et d'autre de ladite interface sont chacune assujettie à l'un des boîtiers pour assembler mécaniquement les deux boîtiers.

Un dispositif d'assemblage du genre mentionné, qui fait l'objet du brevet européen n°138.634, a permis la réalisation d'un système modulaire d'appareillage électrique miniature basse tension. Les appareillages comportent généralement des circuits de commande ou des circuits auxiliaires qui doivent être interconnectés lors de l'assemblage de deux ou de plusieurs modules. Dans l'exemple le plus simple d'un télérupteur bipolaire réalisé par l'assemblage de deux télérupteurs unipolaires, les deux bobines de commande doivent être connectées en parallèle pour assurer un fonctionnement simultané des deux commandes. Cette mise en parallèle peut être réalisée au niveau des bornes de connexion externe du circuit de commande, mais la mise en place de ces connexions complique le montage.

La présente invention a pour but de perfectionner le dispositif d'assemblage mécanique précité, en lui associant la fonction de connexion électrique des circuits, notamment de commande des boîtiers assemblés.

Le dispositif d'assemblage selon l'invention est caractérisé en ce que ledit cavalier est agencé en pont de contact électrique, qui coopère en position active avec des plages de contact ménagées sur chacun desdits boîtiers,en regard desdites parties en saillie du cavalier pour réaliser une connexion électrique entre lesdites plages et qu'une liaison électrique est ménagée entre ladite borne de connexion externe et ladite plage de contact d'un même boîtier.

La mise en place du cavalier d'assemblage mécanique des deux modules assure donc automatiquement leur connexion électrique et évite tout risque d'erreur de câblage. Le cavalier est avantageusement, de la manière décrite dans le brevet précité, agencé en forme de coulisseau, susceptible d'être déplacé dans des glissières ménagées sur les faces latérales étroites des boîtiers. En position active d'assemblage, le coulisseau chevauche l'interface entre les deux boîtiers, et les parties en saillie de part et d'autre de cette interface sont encliquetées sur des saillies ménagées dans les glissières. Le lecteur se reportera avantageusement au brevet précité pour de plus amples détails sur le mode de réalisation du cavalier et des glissières associées.

La plage de contact, qui coopère avec le cavalier, est de préférence logée dans le fond de la glissière, en particulier dans le fond d'une rainure pratiquée dans la glissière, l'entrée de cette rainure étant suffisamment étroite pour empêcher tout contact accidentel. Le cavalier porte un pont de contact électrique susceptible de s'insérer dans ladite rainure pour venir au contact de la plage de contact en position active du cavalier. Le pont de contact peut être réalisé de différentes manières et comprendre notamment une lame métallique élastique allongée s'étendant dans la direction longitudinale du cavalier. Le pont de contact peut également résulter d'un dépôt métallique sur une partie isolante venant de moulage avec le cavalier.

Le boîtier standard comporte des bornes de connexions externes du circuit de commande ou auxiliaire et selon un développement de l'invention, ces bornes sont mises à contribution pour la connexion des plages de contact qui coopèrent avec le cavalier.

Le conducteur de liaison peut être agencé en barrette, dont l'une des extrémités est insérée dans la borne de connexion, et dont l'autre extrémité est conformée en plage de contact. La mise en place des plages de contact peut être réalisée en usine ou être confiée à l'utilisateur selon les assemblages prévus.

Le dispositif d'assemblage selon l'invention a été conçu particulièrement pour des télérupteurs, mais il est clair qu'il peut être utilisé pour l'assemblage de boîtiers moulés contenant d'autres appareillages électriques. Dans le cas des télérupteurs, il peut assembler mécaniquement deux ou plusieurs pôles pour constituer des télérupteurs multipolaires, la connexion en parallèle des bobines de commande de chaque pôle étant assurée par les cavaliers munis de ponts de contact. Le même dispositif sert à l'assemblage de modules auxiliaires à des modules télérupteurs, ces modules auxiliaires pouvant contenir des circuits de différenciation de la commande de fermeture, et de la commande d'ouverture, ou des circuits de télécommande par des bus de transmission de données, ou des circuits de charge connectés en parallèle de la bobine du télérupteur pour éviter des commandes intempestives, ou tout autre circuit auxiliaire de commande et/ou de signalisation.

Chaque boîtier comporte avantageusement deux cavaliers montés chacun dans une glissière ménagée sur l'une des petites faces latérales du boîtier, laquelle porte également les bornes de connexion de puissance et les bornes du circuit de commande. Le même cavalier peut être indifféremment déplacé vers un côté ou vers l'autre selon la position du boîtier associé. Ce dispositif permet l'assemblage d'un nombre quelconque de modules, dont certains peuvent être interconnectés électriquement par ces cavaliers, tandis que d'autres sont simplement maintenus mécaniquement, et le bloc constitué par ces modules assemblés peut être encliqueté de la manière usuelle sur un rail de support, notamment à profil symétrique.

D'autres avantages et caractéristiques ressortiront plus clairement de la description qui va suivre, d'un mode de mise en oeuvre de l'invention donné à titre d'exemple, et représenté aux dessins annexés dans lesquels:

La figure 1 est une vue schématique en perspective de deux modules ou boîtiers assemblés par le dispositif selon l'invention.

La figure 2 est une vue partielle de la figure 1, le cavalier d'assemblage étant supposé enlevé.

La figure 3 est une vue schématique en perspective de l'arrière du cavalier selon la figure 1.

La figure 4 est une vue analogue à celle de la figure 3 du cavalier vu de devant.

La figure 5 est une vue analogue à celle de la figure 3, illustrant une variante de réalisation du cavalier.

La figure 6 est une vue de côté à échelle agrandie montrant la barrette de liaison entre la borne de connexion externe et la plage de contact du boîtier selon la figure 1.

La figure 7 est une vue en coupe suivant la ligne 7-7 de la figure 6.

La figure 8 est une vue en coupe suivant la ligne 8-8 de la figure 7, illustrant l'assemblage de trois boîtiers, deux modes de réalisation du pont de contact du cavalier étant montrés.

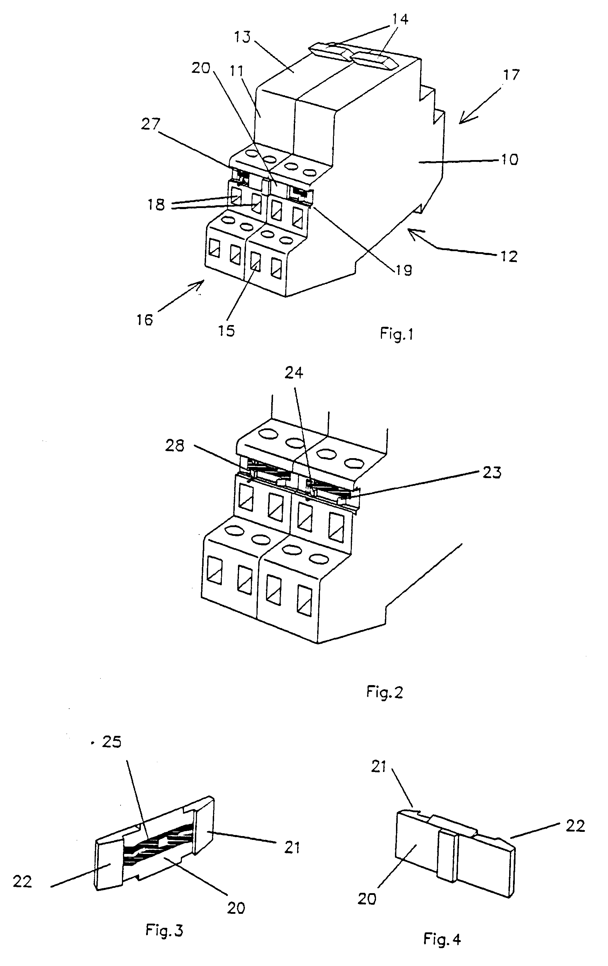

Sur les figures 1 et 2, des modules ou blocs, en l'occurrence des boîtiers moulés miniatures 10,11 de télérupteurs, sont accolés et assemblés pour constituer un bloc multipolaire. Chaque boîtier moulé 10,11 est encliqueté de la manière usuelle par sa face arrière 12 sur un rail à profil symétrique de support. (non représenté). La face avant 13 des boîtiers 10,11 porte une manette 14 de commande manuelle du télérupteur. Des bornes de connexions de puissance 15 sont disposées sur les faces 16,17 latérales étroites, tandis que les boîtiers successifs 10,11 sont accolés par leur grande face latérale. Sur ces faces latérales étroites 16,17 sont également disposées des bornes de connexions externes 18 au-dessus et en retrait des bornes de puissance 15. Sur chacune de ces faces latérales étroites 16,17 est de plus ménagée une glissière 19 qui s'étend au-dessus des bornes de connexions externes 18, perpendiculairement aux grandes faces du boîtier sur toute sa largeur. Dans la glissière 19 est monté à coulissement, un cavalier 20 à profil en queue d'aronde. Les deux extrémités 21,22 du cavalier 20 sont conformées en crochet susceptible de s'encliqueter sur des saillies conjuguées 23,24, ménagées sur le fond de la glissière 19. Dans la position d'assemblage représentée sur la figure 1, le cavalier 20 chevauche l'interface entre les deux boîtiers 10,11 et ses crochets d'extrémités 21,22 sont encliquetés sur les saillies conjuguées 23,24 des boîtiers 10,11, pour maintenir ces derniers assemblés. Chaque boîtier 10,11 est livré avec ses cavaliers 20 dans la position centrale dans la glissière 19, et après accolement des deux boîtiers 10,11, le cavalier est déplacé en direction de l'autre boîtier pour venir dans la position de chevauchement et d'assemblage, représentée à la figure 1, les pentes des saillies 23,24 et des crochets 21,22 étant agencées pour réaliser l'encliquetage dans cette position de chevauchement. Un tel dispositif d'assemblage par cavaliers coulissants 20 est décrit en détail dans le brevet européen n°138634 auquel on se réfèrera avantageusement pour de plus amples détails.

Selon la présente invention, le cavalier 20 porte sur sa face interne à la glissière 19 une lame métallique élastique 25 formant un pont de contact électrique s'étendant dans la direction de coulissement du cavalier 20. Dans le fond 26 de la glissière 19 est disposée une plage de contact 27 susceptible de coopérer avec le pont de contact 25. La plage de contact 27 est constituée par une extrémité d'une barrette de liaison 28, dont l'extrémité opposée 29 est insérée dans une borne de connexion externe 18. La plage de contact 27 est logée dans une rainure 30 à ouverture restreinte, disposée dans le fond de la glissière 19 pour éviter tout contact accidentel.

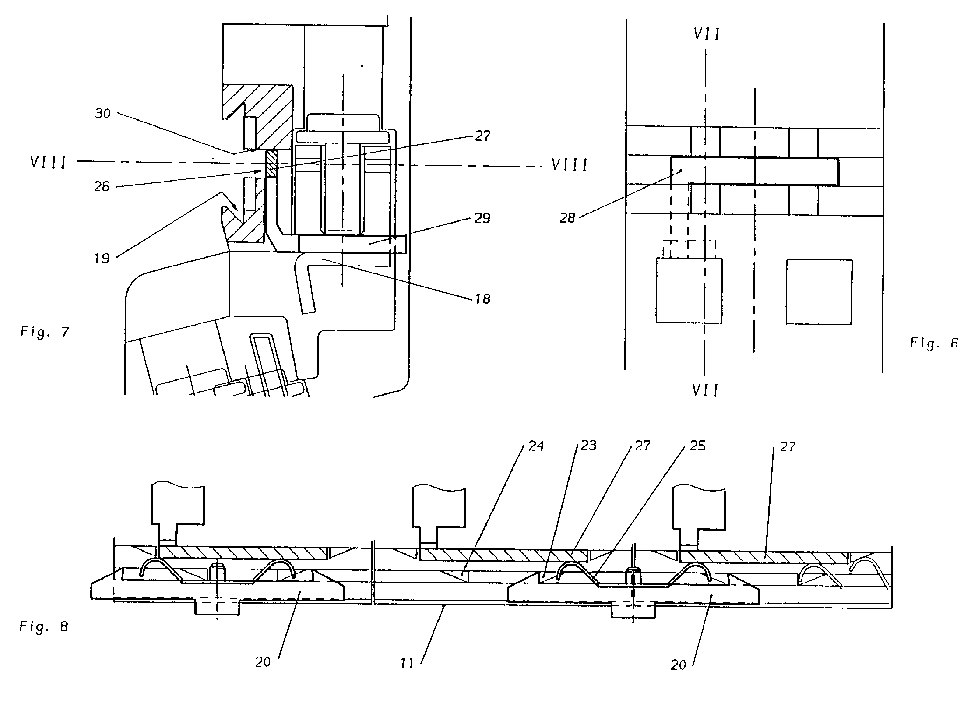

En se référant plus particulièrement à la figure 8, on voit qu'un cavalier 20 en position d'assemblage de deux boîtiers 10,11 assure une liaison électrique entre les plages de contact 27 de ces deux modules. La connexion électrique par le pont de contact 25 entre les deux boîtiers 10 et 11 s'établit simultanément à leur assemblage mécanique par le cavalier 20. La figure 8 montre sur la partie gauche un cavalier 20 en position inactive et il est facile de voir qu'en le faisant coulisser vers la droite, il est possible d'assembler le boîtier correspondant au boîtier 11 en assurant également la connexion électrique.

Le dispositif d'assemblage selon l'invention est applicable à différents types de modules, dont deux sont décrits ci-dessous, en référence aux figures 9 et 10.

Sur la figure 9 on reconnait les deux boîtiers 10,11 accolés, ayant chacun quatre logements de bornes de puissance 15, dont deux sont inutilisées dans le boîtier 11. A chaque paire de bornes opposées 15, est associé un circuit de puissance 31 comprenant une paire de contacts 32 actionnée par une bobine 33 par l'intermédiaire d'un mécanisme non représenté, par exemple du type télérupteur provoquant à chaque impulsion de commande de la bobine 33, un changement de position des contacts 32. La bobine 33 est connectée à deux bornes de connexion externe opposées 18, et à chacune de ces bornes 18, est reliée une plage de contact 27. Dans l'exemple illustré par la figure 9, les deux autres logements de bornes de connexions externes de chaque boîtier 10,11 sont inutilisées. Les ponts de contacts 25 des cavaliers 20 coopèrent avec les plages de contacts 27 des deux boîtiers 10,11 pour connecter en parallèle les deux bobines 33. On comprend qu'il suffit de relier les deux fils d'alimentation (non représentés) des bobines 33 aux bornes de connexion externe d'un boîtier pour alimenter automatiquement les bobines 33 des deux boîtiers 10,11. Par assemblage d'un télérupteur unipolaire à boîtier moulé 11 à un télérupteur bipolaire à boîtier moulé 10, on réalise un télérupteur tripolaire dont les deux bobines de commande 33 sont connectées en parallèle par les cavaliers 20 d'assemblage mécanique des deux boîtiers 10,11. Il est clair que les boîtiers 10,11 pourraient tous deux contenir des télérupteurs bipolaires ou unipolaires ou des appareillages d'un type différent, notamment des contacteurs, et que le dispositif d'assemblage peut être utilisé pour la connexion d'autres modules, notamment les modules standards auxiliaires de télérupteurs. La figure 10 illustre à titre d'exemple l'assemblage de deux modules auxiliaires 34,35 aux boîtiers assemblés 10,11 selon la figure 9. Les boîtiers des modules auxiliaires 34,35 sont identiques aux boîtiers 10,11 et le module de gauche 34 constitue un module de charge qui d'une manière connue en soi permet de connecter une impédance en parallèle du circuit de commande des bobines 33. Le module 34 est assemblé au boîtier 11 par les deux cavaliers 20 de la manière décrite ci-dessus,lesquels comportent chacun un pont de contact 25 qui coopère avec la plage de contact 27 du boîtier 11. Le module 35 accolé à droite du boîtier 10 est un module de différenciation de la commande d'ouverture et de fermeture des télérupteurs 10,11. Le module 35 est agencé pour une double commande dont chacune comporte un contact inverseur 36 mécaniquement accouplé au contact du boîtier 10. Dans la position d'ouverture représentée sur la figure 10, seul un ordre de fermeture appliqué à la borne 37 est transmis au télérupteur, un ordre d'ouverture appliqué à la borne 38 étant inhibé. Lors d'une fermeture du télérupteur 10,11, le contact inverseur 36 bascule dans la direction opposée, de manière à transmettre un ordre d'ouverture appliqué à la borne 38, et à empêcher la transmission d'un ordre par l'application d'un signal à la borne 37. Un cavalier 20 à pont de contact 25 relie électriquement le module 35 au boîtier 10 pour appliquer les ordres aux bobines 33. Le cavalier 20 sur la face latérale opposée est dépourvue de pont de contact 25, une deuxième liaison électrique entre les modules étant dans ce cas inutile. Selon les installations, les modules 34,35 peuvent être remplacés par des modules d'un type différent, bien connu des spécialistes, ou des modules additionnels peuvent être accolés aux modules représentés sur la figure 10 pour réaliser un système plus élaboré. Les bornes 18 sont disponibles pour les raccordements externes des circuits de commande et éventuellement pour des liaisons additionnelles qui ne pourraient pas être réalisées par les cavaliers 20. Les modules sont interchangeables et l'ensemble constitue un système modulaire simple dont la mise en oeuvre est aisée.

L'invention a été décrite en relation à des boîtiers standards 10,11 ayant tous deux paires de logements de bornes de puissance 15, et deux paires de logements de bornes de connexions externes 18, certaines étant parfois inutilisées. On comprend que le système d'assemblage est utilisable avec des boîtiers ayant un nombre inférieur de bornes ou n'étant équipé que des bornes nécessaires pour l'appareillage logé dans ce boîtier. Si le module est toujours utilisé en association avec un autre module, il est possible de supprimer les bornes de connexions externes 18, le raccordement électrique étant toujours réalisé par les plages de contact 27 directement reliées au circuit auxiliaire ou de commande du module. La connexion du circuit externe de commande peut d'ailleurs être réalisée d'une manière différente, par exemple par des clips de connexions.

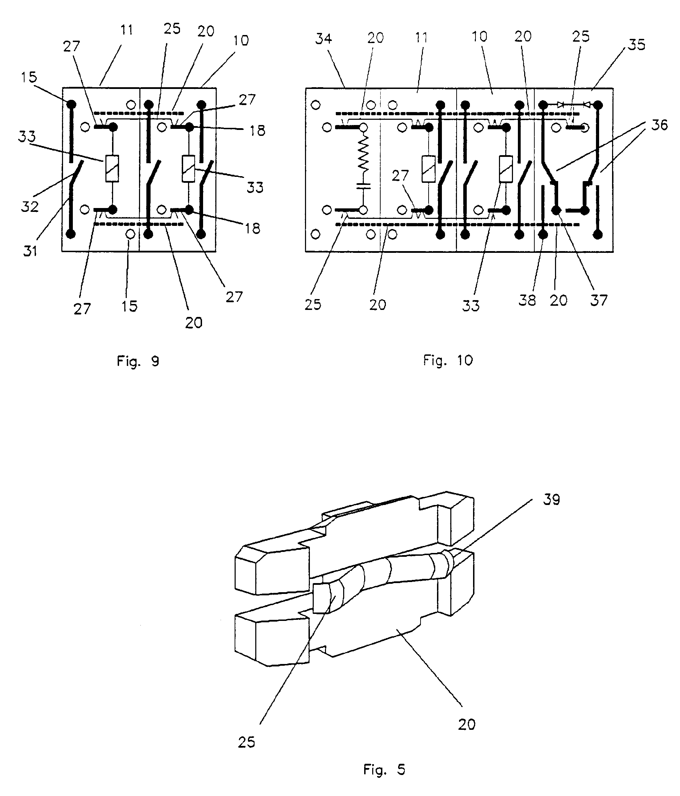

La figure 5 illustre une variante de réalisation du cavalier 20 constitué par un pièce moulée monobloc, dont la partie centrale 39 est agencée en forme de pont de contact 25. La pièce centrale 39 est revêtue d'une couche conductrice formant le pont de contact 25. D'autres modes de réalisation du cavalier 20 sont d'ailleurs possibles sans sortir du cadre de l'invention telle que revendiquée et si le nombre de connexions mécaniques et électriques entre deux modules accolés est supérieur à deux,on peut concevoir un système utilisant plus de deux cavaliers d'assemblage.

## Revendications

1. Dispositif d'assemblage de deux boîtiers moulés (10,11) accolés de logement d'un appareillage électrique miniature ayant un circuit, notamment de commande (33), relié à deux bornes (18) de connexion externe, comprenant un cavalier (20) de liaison à fixation rapide qui chevauche en position active l'interface des deux boîtiers (10,11), et dont les parties (21,22) en saillie de part et d'autre de ladite interface sont chacune assujettie à l'un des boîtiers (10,11) pour assembler mécaniquement les deux boîtiers (10,11), caractérisé en ce que ledit cavalier (20) est agencé en pont de contact électrique (25), qui coopère en position active avec des plages de contact (27) ménagées sur chacun desdits boîtiers (10,11), en regard desdites parties (21,22) en saillie du cavalier (20) pour réaliser une connexion électrique entre lesdites plages (27) et qu'une liaison électrique (28) est ménagée entre ladite borne (18) de connexion externe et ladite plage de contact (27) d'un même boîtier (10,11).

2. Dispositif d'assemblage selon la revendication 1 caractérisé en ce que ledit cavalier (20) en forme de coulisseau en un matériau isolant est monté à coulissement dans des glissières (19) ménagées dans lesdits boîtiers (10,11) sur les faces latérales étroites portant lesdites bornes (18) et que lesdites glissières (19) sont alignées en position accolée des boîtiers (10,11) et présentent des saillies (23) d'encliquetage desdites parties (21,22) en saillie du cavalier (20).

3. Dispositif d'assemblage selon la revendication 1 ou 2, caractérisé en ce que la glissière (19) s'étend sur toute la largeur de la face latérale étroite du boîtier (10,11), ledit coulisseau étant susceptible d'être déplacé en saillie latérale d'un côté ou de l'autre du boîtier (10,11).

4. Dispositif d'assemblage selon la revendication 1,2 ou 3, caractérisé en ce que ladite plage de contact (27) est logée dans le fond de la glissière (19) et que ledit pont de contact (25) est disposé sur la face du cavalier (20) en regard dudit fond pour coopérer avec la plage de contact (27) en position active du cavalier (20).

5. Dispositif d'assemblage selon la revendication 4, caractérisé en ce que le pont de contact (25) comprend une lame métallique élastique fixée audit cavalier(20) dans la direction de coulissement.

6. Dispositif d'assemblage selon la revendication 4, caractérisé en ce que ledit pont de contact (25) comprend une couche métallique déposée sur une partie isolante souple (39) venant de moulage avec ledit cavalier (20).

7. Dispositif d'assemblage selon l'une quelconque des revendications précédentes, caractérisé en ce que ladite liaison électrique (28) entre la borne (18) et la plage de contact (27) du boîtier (10,11) comporte une barrette dont l'une des extrémités (29) est insérée dans la borne (18) et dont l'autre extrémité est conformée pour constituer ladite plage de contact (27).

8. Dispositif d'assemblage selon l'une quelconque des revendications précédentes pour un boîtier (10,11) contenant un télérupteur avec des contacts de puissance (32) reliés à des bornes de puissance (15) disposées sur les deux petites faces latérales opposées du boîtier (10,11) et avec une bobine (33) de commande desdits contacts (32), reliée auxdites bornes (18) de connexion externe disposées au dessus des bornes de puissance (15) sur lesdites petites faces latérales,caractérisé en ce que lesdites glissières (19) s'étendent sur lesdites petites faces latérales à proximité desdites bornes de connexion (18).

9. Dispositif d'assemblage selon l'une quelconque des revendications précédentes, caractérisé en ce que l'un (10) desdits boîtiers contient un télérupteur avec une bobine de commande (33) et que ledit cavalier (20) met électriquement en parallèle de la bobine (33), une autre bobine ou un circuit de charge, de commande ou de connexion logé dans l'autre desdits boîtiers (11,34,35).

10. Dispositif d'assemblage selon l'une quelconque des revendications précédentes, caractérisé en ce qu'un cavalier (20) est disposé sur chacune desdites petites faces latérales du boîtier.

## Patentansprüche

1. Vorrichtung zur Verbindung von zwei aneinandergereihten Isolierstoffgehäusen (10, 11) zur Aufnahme elektrischer Klein-Schaltgeräte mit einem Stromkreis, insbesondere einem Steuerstromkreis (33), der an zwei Klemmen (18) zur externen Verdrahtung angeschlossen ist, wobei die Verbindungsvorrichtung eine Schnellmontageklammer (20) umfaßt, die in der aktiven Stellung die Stoßfuge zwischen den beiden Gehäusen (10, 11) überlappt und deren auf den beiden Seiten der Stoßfuge hervorstehende Enden (21, 22) jeweils an einem der Gehäuse (10, 11) befestigt sind, um so die beiden Gehäuse (10, 11) mechanisch miteinander zu verbinden, dadurch gekennzeichnet, daß die genannte Klammer (20) als elektrische Kontaktbrücke (25) ausgebildet ist, die in der aktiven Stellung mit in jedem der genannten Gehäuse (10, 11) gegenüber den genannten hervorstehenden Enden (21, 22) der Klammer (20) installierten Kontaktstücken (27) zusammenwirkt, um eine elektrische Verbindung zwischen den genannten Kontaktstücken (27) herzustellen, und daß eine elektrische Verbindung (28) zwischen der genannten Klemme (18) für die externe Verdrahtung und dem genannten Kontaktstück (27) desselben Gehäuses (10, 11) besteht.

2. Verbindungsvorrichtung nach Anspruch 1, dadurch gekennzeichnet, daß die genannte, als Schieber ausgebildete Isolierstoffklammer (20) verschiebbar in Gleitschienen (19) montiert ist, die in die die genannten Klemmen (18) tragenden Schmalseiten der genannten Gehäuse (10, 11) eingearbeitet sind, und daß die genannten Gleitschienen (19) in der aneinandergereihten Stellung der Gehäuse (10, 11) fluchtend angeordnet sind sowie Nasen (23) zur Schnappverbindung mit den genannten hervorstehenden Enden (21, 22) der Klammer (20) aufweisen.

3. Verbindungsvorrichtung nach Anspruch 1 oder 2, dadurch gekennzeichnet, daß sich die Gleitschiene (19) entlang der gesamten Schmalseite des Gehäuses (10, 11) erstreckt, wobei der genannte Schieber zu beiden Seiten über die Seitenkante des Gehäuses (10, 11) hinweg verschoben werden kann.

4. Verbindungsvorrichtung nach Anspruch 1, 2 oder 3, dadurch gekennzeichnet, daß das genannte Kontaktstück (27) im Innern der Gleitschiene (19) angeordnet ist, und daß die genannte Kontaktbrücke (25) auf der der genannten Gleitschiene (19) zugewandten Seite der Klammer (20) angeordnet ist, um in der aktiven Stellung der Klammer (20) mit dem Kontaktstück (27) zusammenzuwirken.

5. Verbindungsvorrichtung nach Anspruch 4, dadurch gekennzeichnet, daß die Kontaktbrücke (25) eine längs der Verschieberichtung der genannten Klammer (20) befestigte Metall-Federzunge aufweist.

6. Verbindungsvorrichtung nach Anspruch 4, dadurch gekennzeichnet, daß die genannte Kontaktbrücke (25) eine Metallschicht aufweist, die auf einem an die genannte Klammer (20) angeformten elastischen Isolierstoffteil (39) aufgebracht ist.

7. Verbindungsvorrichtung nach irgendeinem der vorhergehenden Ansprüche, dadurch gekennzeichnet, daß die genannte elektrische Verbindung (28) zwischen der Klemme (18) und dem Kontaktstück (27) des Gehäuses (10, 11) eine Kontaktschiene umfaßt, deren erstes Ende (29) in die Klemme (18) hineinragt und deren zweites Ende als das genannte Kontaktstück (27) ausgebildet ist.

8. Verbindungsvorrichtung nach irgendeinem der vorhergehenden Ansprüche für ein Gehäuse (10, 11) mit einem Stromstoßrelais, dessen Leistungskontakte (32) an Leistungsklemmen (15) herausgeführt sind, die an den beiden gegenüberliegenden Schmalseiten des Gehäuses (10, 11) angeordnet sind, und dessen Spule (33) zur Ansteuerung der genannten Kontakte (32) mit den genannten Klemmen (18) für die externe Verdrahtung zusammenwirkt, die an den Schmalseiten oberhalb der Leistungsklemmen (15) angeordnet sind, dadurch gekennzeichnet, daß die genannten Gleitschienen (19) auf den genannten Schmalseiten in der Nähe der genannten Klemmen (18) für die externe Verdrahtung verlaufen.

9. Verbindungsvorrichtung nach irgendeinem der vorhergehenden Ansprüche, dadurch gekennzeichnet, daß eines (10) der genannten Gehäuse ein Stromstoßrelais mit einer Steuerspule (33) umfaßt, und daß die genannte Klammer (20) die Spule (33) elektrisch mit einer im anderen genannten Gehäuse (11, 34, 35) befindlichen anderen Spule oder mit einem Lastkreis, Steuerkreis oder Verbindungsstromkreis parallelschaltet.

10. Verbindungsvorrichtung nach irgendeinem der vorhergehenden Ansprüche, dadurch gekennzeichnet, daß auf jeder der genannten Schmalseiten des Gehäuses je eine Klammer (20) vorgesehen ist.

## Claims

1. A device for assembling two adjacent moulded cases (10, 11) housing miniature electrical switchgear having a circuit, notably a control circuit (33), connected to two external connection terminals (18), comprising a fast-fixing connecting runner (20) which in the active position overlaps the interface of the two cases (10, 11), and whose parts (21, 22) protruding out on both sides of said interface are each secured to one of the cases (10, 11) to mechanically assemble the two cases (10, 11), characterized in that said runner (20) is arranged as an electrical contact bridge (25), which cooperates in the active position with contact pads (27) arranged on each of said cases (10, 11), facing said protruding parts (21, 22) of the runner (20) to achieve an electrical connection between said pads (27) and that an electrical connection (28) is arranged between said external connection terminal (18) and said contact pad (27) of one and the same case (10, 11).

2. The assembly device according to claim 1, characterized in that said runner (20) in the form of a slide made of insulating material is slidingly mounted in slides (19) arranged in said cases (10, 11) on the narrow side faces bearing said terminals (18) and that said slides (19) are aligned in the adjoined position of the cases (10, 11) and present protrusions (23) for clip-fastening of said protruding parts (21, 22) of the runner (20).

3. The assembly device according to claim 1 or 2, characterized in that the slide (19) extends over the whole width of the narrow side face of the case (10, 11), said sliding runner being able to be moved in lateral protrusion to one or the other side of the case (10, 11).

4. The assembly device according to claim 1, 2 or 3, characterized in that said contact pad (27) is housed in the bottom of the slide (13) and that said contact bridge (25) is located on the face of the runner (20) facing said bottom to cooperate with the contact pad (27) in the active position of the runner (20).

5. The assembly device according to claim 4, characterized in that the contact bridge (25) comprises a flexible metal blade fixed to said runner (20) in the sliding direction.

6. The assembly device according to claim 4, characterized in that said contact bridge (25) comprises a metal layer deposited on a flexible insulating part (39) cast with said runner (20).

7. The assembly device according to any one of the above claims, characterized in that said electrical connection (28) between the terminal (18) and contact pad (27) of the case (10, 11) comprises a strip one of whose ends (29) is inserted in the terminal (18) and the other end of which is shaped so as to form said contact pad (27).

8. The assembly device according to any one of the above claims for a case (10, 11) containing a remote-controlled switch with power contacts (32) connected to power terminals (15) arranged on the two opposite small side faces of the case (10, 11) and with an operating coil (33) of said contacts (32), connected to said external connection terminals (18) located above the power terminals (15) on said small side faces, characterized in that said slides (19) extend on said small side faces in proximity to said connection terminals (18).

9. The assembly device according to any one of the above claims, characterized in that one (10) of said cases contains a remote-controlled switch with an operating coil (33) and that said runner (20) electrically connects, in parallel with the coil (33), another coil or a load, control or connection circuit housed in the other of said cases (11, 34, 35).

10. The assembly device according to any one of the above claims, characterized in that a runner (20) is arranged on each of said small side faces of the case.
